# EUROPEAN PATENT SPECIFICATION

(11) **EP 2 334 455 B1**
(45) Date of publication and mention of the grant of the patent: **26.11.2014**
(21) Application number: 09778698.2
(22) Date of filing: 24.09.2009
(51) Int. Cl.: B22F 3/10, B22F 3/105, B24D 3/10, B24D 18/00, C09K 3/14

(54) **MICROWAVE PLASMA SINTERING**
MIKROWELLENPLASMASINTERN
FRITTAGE PAR PLASMA MICRO-ONDES

(30) Priority: 26.09.2008 IE 20080784
(43) Date of publication of application: 22.06.2011
(73) Proprietor: Wendt GmbH, 31789 Hameln (DE); University College Dublin National University Of Ireland, Dublin, Dublin 4 (IE)
(72) Inventor: DOWLING, Denis, County Dublin (IE); DENNIS, Peter, A., 31789 Hameln (DE)
(74) Representative: Boyce, Conor
(86) International application number: PCT/EP2009/006901
(87) International publication number: WO 2010/034492

(56) References cited:
- EP-A- 1 770 140
- DE-A1- 19 854 385
- DE-A1-102004 050 256
- US-A- 5 431 967
- US-A- 5 607 489
- US-A1- 2005 181 715
- US-A1- 2006 016 805
- US-A1- 2006 057 016
- US-A1- 2007 023 206
- US-B1- 6 183 689

## Description

### Field of the invention

This invention relates to a process for sintering abrasive particles, for example, diamond and metal powders for use in grinding / wear resistant surfaces.

### Background

Super abrasive grinding and cutting tools are used in applications ranging from glass grinding, dentistry, bone drilling (orthopaedics), metal machining, composite material machining (aeronautics) etc.

Grinding processes such as face grinding typically employ a tool with a solid matrix of diamond or CBN abrasive particles in a metal, ceramic (vitrified) or resin bond. Also, diamond wheels are typically made by one of a number of bonding techniques including; brazing, resin bond, metal bond or vitrified bond according to the required application.

In vitrified bonding, used widely in producing wheels for the automobile industry, abrasive particles with a ceramic binder are fired in a furnace to achieve the optimum bond strength. A disadvantage is that this firing can take up to 20-60 hours. A further disadvantage of such wheels is the brittleness of the ceramic bonds, which make these wheels less suitable for tools subject to high levels of vibration.

In metal bonding, heat is conducted more effectively than with vitrified or resin binders, thus preventing the wheel overheating. Metal bonded wheels are also tougher which enhances grinding efficiency.

Tools are available as two types; multilayer diamond composites and electroplated single crystal layer. The former is obtained by pressing the abrasive / metal powder mixture in a furnace at high temperatures. When electroplating fabrication is used, they are referred to as "plated tools". This tool is made by electroplating a layer of nickel onto a steel substrate with bonded diamond particles. Generally 50-70% of the crystal is covered by the nickel bond matrix. The advantages of this wheel fabrication method are firstly the high density of diamond particles and secondly the low plating temperature, which does not affect the heat treatment of the steel, blank or distort it. The open structure and topography of a plated grinding layer is often useful to achieve higher removal rates.

One of the disadvantages of the electroplated tools is that only a single layer of diamond can be used on the tool. Secondly this route cannot be used for sub 5 µm diamond, as the abrasive grains literally float off the surface in the electroplating bath. Poor crystal retention is also a problem because they are only mechanically entrapped in the bond matrix. As the bond wears below 50% or a heavy pressure is applied, the diamond crystal can dislodge from the bond, reducing wheel life. With a high density of diamond particles, the wheel tends to load and generate heat. Low crystal exposure reduces the swarf clearance required for fast cutting. Since the bond level is 50-70% of the diamond, very little is exposed to cut.

Also, manufacturing problems increase as the parts become more complicated. For example in some complicated forms the diamond particles may be completely covered in one area while only having a low level eg. 15% of the crystal covered in another area of the wheel.

Another technique involves pressing the metal powder / abrasive and inductively heating the mix. While this method is rapid, the difficulty is that porosity within the sample is lost during the heating action. This porosity is of key importance for the grinding action.

Non-plasma based microwave firing is also known, for example, as disclosed in "Advances in High-Temperature Microwave Processing" Cheng J., Cherian K., International Journal of Thermal Technology, August 8, 2007.

Dana, USA (http://dana.mediaroom.com/index.php/press_releases/2008) apply atmospheric microwave plasmas for the sintering of metal powders for use in the automobile industry.

E.L. Kerner and D.L. Johnson, Am. Ceram. Soc. Bull, 64(8), 1985, 1132-1136 discloses the sintering effect of a microwave plasma on alumina metal powder.

J.M. Lourenco, A.M. Maliska, A.N. Klein, J.L. Rene Muzart, Mater. Res. 7(2), Sao Carlos Apr./June 2004 discloses the sintering of ceramics in a glow discharge plasma. US2006016805 and DE 4340652 deal with the use of combined microwave and resistance heating for the fabrication of ceramic components and machine tools respectively.

CN 1431167 discloses microwave plasma sintering of bioceramics.

CN 1457062 discloses fabrication of ZnO ceramic components using microwave sintering.

DD248538 discloses the use of electrolytic plasmas for spraying particles in the manufacture of grinding tools.

JP2005298892 discloses a laser treatment for the local sintering of cobalt containing tungsten carbide.

US2006022386 discloses a plasma jet system for sintering alumina and titania powders.

US2006057016 discloses enhancing the effectiveness of an atmospheric microwave plasma jet sintering using a plasma catalyst (carbon nanoparticles, nanotubes etc).

JP2004121305 discloses the addition of phosphorous (0.1-15%) to the nickel which is electroplated around the diamond in a dental burr.

CA2214276 discloses the deposition of diamond onto orthodontic burrs using chemical vapour deposition (CVD) techniques.

CA2552934 describes the use of microwave plasma sintering amongst other techniques as a route for bonding diamond to a roller cone drill bit. The polycrystalline diamond is bonded to the substrate by at least one method selected from hot pressing, spark plasma sintering, hot isostatic pressing, quasi-isostatic pressing, rapid omnidirectional compaction, dynamic compaction, explosion compaction, powder extrusion, diffusion bonding, microwave sintering, plasma assisted sintering, and laser sintering.

DE 198 54 385 discloses a method for producing an abrasive article, wherein a mixture of abrasive particles and a metal binding matrix are deposited and pressed in a press to form a green body, subsequent said green body is loaded into a microwave plasma chamber, the chamber is at least partially evacuated and the green body is sintered in a microwave plasma for a period of time.

### Summary

According to the present invention there is provided a method for producing an article having a composite surface including abrasive particles according to claim 1.

The dependent claims 2-15 describe further embodiments of the invention.

The present invention relates to the use of microwave plasma treatments as a method of sintering metal bonded superabrasives.

In particular, the invention provides a process using a low pressure microwave plasma to fabricate metal bonded abrasive (diamond) / wear resistant composites.

In one application of the process diamond powder is mixed with a fine nickel or comparable metal powder, a part is shaped by pressing in a mould and the part is then sintered in a microwave plasma.

One application of tools produced according to the invention is in glass grinding. A second application area is the fabrication of diamond grinding burs. Also, metal bonded diamond composites produced with the invention can be used as wear resistant surfaces in the oil drilling and other industries.

The microwave plasma allows for the production of metal bonded diamond composites with sub 6µm diamond powder having controlled porosity.

The superior mechanical properties of the microwave sintered composites facilitate the manufacture of sub millimeter abrasive tooling for which there is an increasing demand.

The fabrication process is very rapid and energy efficient, for example, 10 minutes compared with 20 hours and more using conventional furnace technology for vitrified wheels.

As well as diamond particles, the invention can also be used with abrasive particles including cubic boron nitride (CBN), tungsten carbide, silicon carbide or aluminum oxide.

### Brief Description of the Drawing

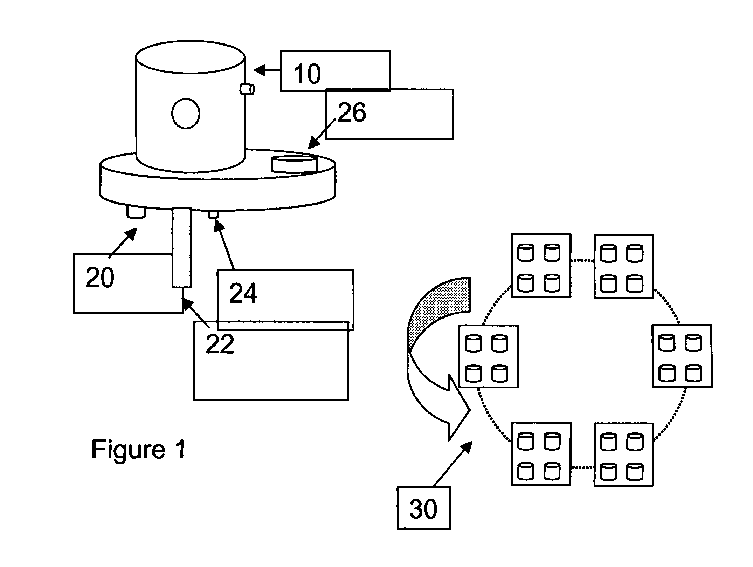

Various embodiments of the invention will now be described with reference to Figure 1 which is a schematic diagram of a plasma treatment chamber.

### Description of the Preferred Embodiments

In a first exemplary process, a mixture of nickel and diamond (preferably nickel coated) powders is prepared and these powders are then pressed using a low pressing force to form a green body (roughly held together object). This body is then sintered typically for a period of 5-15 minutes in a microwave plasma. The strength of the metal bond holding the diamonds in place can be controlled by altering the plasma treatment conditions.

Typically, this process can be used to fabricate superabrasive / metal diamond composite based grinding inserts.

For hard wear resistant surfaces, metal and metal coated abrasive powder such as described for the first exemplary process are pressed using a higher pressing force to form a denser 'green' body than required for grinding segments. This body is then sintered for 10-15 minutes using at higher microwave powers and the resultant composite is considerably denser than used for grinding inserts. Due to its reduced porosity and tightly bound abrasive one potential application is for use these surfaces to enhance wear resistance. One potential application is as a wear resistant surface on engineering components used in aggressive environments such as in the drilling for oil. Another application could be for use as a tip on diamond blades.

In a further exemplary processing, powder mixtures of metal and metal coated abrasives can be bonded onto substrates such as stainless steel and then fired in the microwave plasma to produce a coated layer. This coating can offer protection against wear of the substrate material or be used as an abrasive surface for grinding or cutting operations. A potential application is a grinding burr which could be used instead of burrs fabricated using electroplating technology.

Where it is desired to produce a superabrasive / metal bonded composite shaped part, a two step process can be employed. In a first step, the powder mixture is prepared and pressed. The pressed part is then fired using a microwave plasma at a relatively low power. The part is then removed and shaped using conventional machining technology when in its semi-fired state. After shaping, the composite is again fired at higher power to produce a shaped dense wear resistant composite part. One application of this technology would be to produce burs with geometrically complex 'heads'.

More particularly, each of the above processes can include preparing a mixture of diamond powder with a fine (∼1 µm) nickel powder, pressing the part in a mould and then placing the pressed part in a low pressure, for example, approx 20 mBar, hydrogen microwave plasma. It will be seen that hydrogen is employed as a reducing gas in the embodiment, however in alternative implementations, inert gases such as nitrogen or argon, or mixtures of such gases and reducing gases can be employed. In the plasma the nickel partially melts and flows over the diamond grains to form a tough binder holding the grains together.

A significant advantage of this process is that firing need take no more than 10-15 minutes in the plasma compared with 25 to 30 hours at temperatures of over 1000°C in a furnace. The fracture toughness of the composite produced, as determined using Instron tests, have been found to be similar or superior to those of vitrified segments produced commercially. The plasma treated composites however have been found to exhibit twice the fracture toughness of similar composites formed by partially melting the nickel in a controlled atmosphere furnace.

More particular applications are as follows:

### Soft Grinding Surface

A 50/50 by weight mixture of INCO Type T110 nickel powder and 55% by weight nickel coated diamond are mixed using a Turbula ball mill for 80 minutes. A portion of the mixture is then pressed using a unaxial press and suitable die. In order to produce a green body with properties suitable for the production of a soft grinding surface the sample is pressed to 150MPa. The pressed shape is transferred to the circumferential antennae plasma (CAP) reactor and placed in the vented microwave chamber. The chamber is then evacuated to less than 0.1 mbar. When the chamber has been evacuated the hydrogen is allowed into the chamber. The pressure in the chamber is allowed to reach 20 mbar and using a pressure control valve the pressure is not allowed to exceed this value. Once the pressure in the chamber has stabilised at 20 mbar, the microwave generator is initiated and the power increased to an output in the range of 1.9kW to 3.5kW as appropriate. These settings are maintained for 10 minutes after which the microwave source is turned off and the hydrogen flow closed. The chamber is evacuated and allowed to cool for 5 minutes. After this cooling period the composite is removed from the microwave chamber.

The resultant body shows properties suitable for use as a grind machine insert. These properties mean that the matrix material holding the diamonds in place wears at approximately the same rate as diamonds are lost, thus allowing renewal of the grinding surface.

### Hard Wear Resistant Surface

A 50/50 by weight mixture of INCO Type T110 nickel powder and 55% by weight nickel coated diamond are mixed using a Turbula ball mill for 80 minutes. A portion of the mixture is then pressed using a unaxial press and suitable die. In order to produce a green body with properties suitable for the production of a hard wear resistant surface, the sample is pressed to 350MPa. The pressed shape is transferred to the circumferential antennae plasma machine and placed in the vented microwave chamber. The chamber is then evacuated to less than 0.1 mbar. When the chamber has been evacuated the hydrogen is allowed into the chamber. The pressure in the chamber is allowed to reach 20 mbar, and using a pressure control valve, the pressure is not allowed to exceed this value. Once the pressure in the chamber has stabilised at 20 mbar the microwave generator is initiated and the power increased to an output in the range of 1.9kW to 3.5kW as appropriate. These settings are maintained for 2 minutes after which the microwave power is increased by 50%. These settings are maintained for 3 minutes after which the microwave power is increased by a further 50% of the original output. These settings are maintained for 5 minutes after which the microwave source is turned off and the hydrogen flow closed. The chamber is evacuated and allowed to cool for 5 minutes. After this cooling period the composite is removed from the microwave chamber.

The resultant body shows properties suitable for use as a wear resistant surface. These properties mean that the composite material formed does not undergo wear when exposed to aggressive environmental conditions.

### Coating Technology

A 50/50 by weight mixture of INCO Type T110 nickel powder and 55% by weight nickel coated diamond are placed in a suitable mixing container. For use with stainless steel substrates, 0.2% carbon is added to the mixture and the contents of the container are mixed using a Turbula ball mill for 80 minutes. A portion of the mixture is then pressed onto the substrate to form a coherent green body layer. One particular approach for preparing a metal or cemented carbide surface prior to applying the diamond / nickel composite comprises microblasting the surface. This involves bombarding the surface with a pneumatically driven stream of particles some of which adhere to produce a layer through mechano-chemical bonding. There is a range of different microblasting techniques available such as the ROCATEC method developed by 3M; and as disclosed in WO2008/033867 from Enbio. These mechano-chemical treatments produce a relatively weakly bonded metal / superabrasive layer which can then be sintered using the microwave technique.

The pressing load is depended on the die design and the required coating properties. The substrate material and pressed coating are transferred to the circumferential antennae plasma machine and placed in the vented microwave chamber. The chamber is then evacuated to less than 0.1 mbar. When the chamber has been evacuated the hydrogen is allowed into the chamber. The pressure in the chamber is allowed to reach 20 mbar and using a pressure control valve the pressure is not allowed to exceed this value. Once the pressure in the chamber has stabilised at 20 mbar the microwave generator is initiated and the power increased to an output in the range of 1.9kW to 3.5kW as appropriate. These settings are maintained for 10 minutes after which the microwave source is turned off and the hydrogen flow closed. The chamber is evacuated and allowed to cool for 5 minutes. After this cooling period the composite is removed from the microwave chamber.

This coating can offer protection against wear of the substrate material or be used as an abrasive surface for grinding operations.

### Two Stage Sintering Process

A 50/50 by weight mixture of INCO Type T110 nickel powder and 55% by weight nickel coated diamond are mixed using a Turbula ball mill for 80 minutes. A portion of the mixture is pressed using an unaxial press and suitable die. In order to produce a green body with properties suitable for the production of a soft grinding surface the sample is pressed to 150MPa. The pressed shape is transferred to the circumferential antennae plasma machine and placed in the vented microwave chamber. The chamber is then evacuated to less than 0.1 mbar. When the chamber has been evacuated the hydrogen is allowed into the chamber.

The pressure in the chamber is allowed to reach 20 mbar and using a pressure control valve the pressure is not allowed to exceed this value. Once the pressure in the chamber has stabilised at 20 mbar the microwave generator is initiated and the power increased to an output in the range of 1.9kW to 3.5kW as appropriate. These settings are maintained for 2 minutes after which the microwave source is turned off and the hydrogen flow closed. The chamber is evacuated and allowed to cool for 2 minutes. After this cooling period the green body is removed from the microwave chamber.

At this point the green body exhibits mechanical properties which allow for machining or shaping of the body. This machined green body can then be fully sintered by placing it into the vented microwave chamber and processing as before except that the plasma power is maintained in the range 1.9 kW to 3.5 kW for in the region of 10 minutes.

It has been observed that for diamond sizes in the range 6-12µm, 10-201µm, 20-30µm, 46µm & 54µm, samples containing the larger diamond powders appeared to exhibit more superficial defects compared to those produced with the smaller abrasive. A possible explanation was the reduced binding effect of the T110 nickel matrix powder when used with larger diamond sizes.

In order to investigate this, single sample trials were carried out using the 54µm nickel-coated diamond powders with the INCO T123 and T255 nickel powders. Both these powders have a needle like geometry. The T123 has a particle size range of 3.0 -7.0µm in separate powder particulate form and the T255 has a range from 2.2-2.8µm in a chain-like form. In contrast the T110 is described as a filamentary powder with a particle size of approximately 1.0µm. It was found that the T123 powder performed poorly with significant cracking of the green samples during ejection. The T255 powder performed well and appeared to lead to a thicker sample, i.e. less dense.

Further trials were carried out to investigate the use of combinations of different nickel powders within the same sample. Samples were produced using 50% nickel coated diamond with 30% T110 and 20% T255. The samples as pressed were of good quality under visual inspection and when fired no warping was observed. Typical breaking strengths were around 400 N.

The nickel-diamond samples for the plasma firing trials were produced using a graphite punch and die. The use of a steel punch and die set of a similar size to the graphite die was evaluated. The samples produced using the steel die exhibited a higher level of edge integrity and showed no signs of surface cracking. The use of a steel die set would greatly enhance the consistency and accuracy of green body production.

In further alternative implementations of the present invention, laminated layers can be used, for example, a nickel layer and a diamond / nickel layer, with the nickel layer being fixed to the grinding wheel thus helping to reduce the material costs per sample and increase sample toughness. Nonetheless, it is acknowledged that this process can cause warping due to different levels of thermal expansion and refinement of both the firing process and powder selection is required to prevent this occurring.

It will also be seen that alternative binders to nickel can be employed, including copper and cobalt powders.

Nonetheless, copper can result in globules forming within the matrix and failure to bond with the nickel coated diamond. This may be because melting point of copper is 1083°C, whereas nickel has a melting point of 1455 °C and a copper based process would need to be controlled accordingly.

Cobalt, like nickel raises concerns in relation to toxicity, however cobalt has a melting point of 1494 °C, which is similar to that of nickel of 1455 °C. The results obtained from trials using metal binder powder mixtures comprising 50% nickel coated diamond and various ratios of nickel/cobalt powders are shown in Table 1:

**Table 1: Influence of cobalt powder in the 50% nickel coated diamond : 50% (Ni:Co powder)**

| **%Ni: %Co** | **Breaking strength (N)** | **Surface area (m²/g)** |
|---|---|---|
| 50:0 | 441 | 0.57 |
| 40:10 | 438 | 0.47 |
| 30:20 | 456 | 0.57 |
| 25:25 | 353 | 0.54 |
| 15:35 | 393 | 0.56 |

The results indicate that no significant change in strength was achieved by the use of cobalt. The porosity levels were similar to samples containing nickel coated diamond and nickel powder only. However, microprobe analysis has found that the cobalt may not bind with the nickel-coated diamond as well a nickel based powders.

Further alternative implementations involve additives which might increase sample porosity, as the amount of porosity in the sample and the size of individual pores can be used to control grinding performance. In order to enhance porosity, different additives including glass, starch and graphite were examined with the standard 50/50 mix of nickel coated diamond and nickel powder. The breaking strengths of the samples after plasma firing under a range of conditions were examined using 3-point bend tests and the cross sections of the samples were examined in the SEM to give an indication of surface morphology. The results for each additive are given below:

### Glass

Various concentrations of glass were examined when added to the standard 50/50 mix. The samples were then fired in the microwave plasma at 32% (1.92kW) input power. It has been found that large glass particles did not melt during the plasma firing process and the resulting samples had poor strength. Even after ball milling the glass, to reduce the particle size from 25µm to 18µm, the glass particles still did not appear to melt.

It is thought that as glass is a poor absorber of microwaves, the heat required to melt and flow the glass must be provided through conduction from that portion of the material, which is heated by the microwaves. It was therefore concluded that in general glass alone was not a suitable material for introducing porosity into the samples, whereas materials which would melt or burn off at temperatures lower than that of glass may be more useful.

### Starch

Four samples of the 50:50 nickel: nickel coated diamond mix with various amounts of starch were prepared and fired under the standard 1.92 kW input power firing conditions in the microwave plasma. Due to the high temperatures that are attained rapidly during plasma firing, starch bums out very quickly causing the samples to expand. This however was not found to be a significant problem at the lower starch concentration of 6%. Therefore no samples with starch concentrations greater than 10% were further considered.

To examine the influence of firing conditions on the breaking strength of samples with different concentrations of starch, samples were fired at 1.9, 2.5 kW and at 1.9 kW followed by 2.5 kW. The samples were examined using a SEM (morphology) and a 3-point bend test (breaking strength) was carried out. The two-stage firing was shown to increase the breaking strength of the samples to close to that achieved when no starch additive was included.

The firing conditions were further optimised to produce samples with higher breaking strengths according to the following sequence:

| **Pressure / power / dwell time** | | |
|---|---|---|
| 10 mbar | 0.6 | 1 min |
| 20 mbar | 1.9 | 7 min |
| 20 mbar | 2.4 | 7 min |
| 20 mbar | 2.7 | 2 min |

The initial 1 minute at 10mbar pressure was introduced to reduce the tendency of the green samples to crack / delaminate during firing. This stage produced a lower heat step into the sequence to avoid rapid introduction of heat.

As the starch is hydrated it was decided to produce one batch of samples with hydrated starch and one using starch, which had been, dried overnight at 40°C. Both these batches had nominal breaking strengths of 600N.

The third batch of samples consisted of the 50/50 nickel/diamond mix with no starch, fired under the same conditions. This produced samples with nominal strengths of 900N.

The final batch consisted of the 50/50 nickel /diamond mix with no starch but with a strength comparable to the batches containing starch. This was obtained using the following firing sequence:

| **Pressure / power / dwell time** | | |
|---|---|---|
| 10mbar | 0.6 | 1 min |
| 20mbar | 1.9 | 7 min |
| 20mbar | 2.2 | 6 min |

Although the introduction of starch increased the porosity of the fired samples several observations were made during these trials that indicated potential processing difficulties with this route:
- The samples had a tendency to crack and delaminate during firing. This appears to be related to the relatively rapid heating of the samples during microwave firing. This tendency was reduced but not eliminated by the introduction of the first lower power stage used to fire the sample batches.
- During firing it was noted that there was a visible temperature gradient from the top of the sample to the bottom.
- There was a tendency for the sample to bow or distort during firing. This is probably related to the observed temperature gradient during firing. It was found that this could be counteracted if the firing was carried out in several stages with the samples being turned over between stages.

### Graphite

The introduction of graphite was examined in order to evaluate its influence on the grinding characteristics i.e. the introduction of a soft phase into the matrix, which is easily removed during grinding and effectively acts in a similar fashion to a pore. Preliminary firing trials indicated that the mix could tolerate amounts of up to 3% graphite and still retain reasonable breaking strengths. The effect of varying the intensity of the microwave plasma was evaluated in a series of experiments for samples containing 2% graphite. The results are given in the Table 2. The results shown in this table indicate that for the microwave power range examined (2.1 - 3.3 kW) the breaking loads and surface area measurements appeared to be unaffected by changes in the plasma power. The largest influence on breaking strength was found to be the addition of the graphite itself. The surface area measurements showed some increase in porosity however this was lower than that observed for starch, as unlike the case for starch the graphite does not burn out, thus no voids are being created. It has also been observed that graphite does not bond to the nickel coated diamond during firing but remains in the form of flakes. These flakes would be easily removed during grinding and therefore could potentially act like a pore.

**Table 2 Influence of plasma treatment power on the breaking strength and surface area of nickel coated diamond: nickel samples with 2% graphite additive.**

| **MW power (kW)** | **Breaking strength (N)** | **Surface area (m²/g)** |
|---|---|---|
| 2.1^{◆} | 575 | 0.57 |
| 2.1 | 339 | 0.75 |
| 2.3 | 248 | 0.76 |
| 2.4 | 411 | 0.71 |
| 2.6 | 332 | 0.72 |
| 2.7 | 342 | 0.70 |
| 3.0 | 364 | 0.75 |
| 3.3 | 390 | 0.66 |

| | | |
|---|---|---|
| ^{◆}sample contains 0% graphite. All other samples contain 2% graphite. | | |

In order to enhance the sample strength the graphite concentration was reduced to 1.5% and samples were fired using the following conditions:

| **Pressure / power / dwell time** | | |
|---|---|---|
| 20mbar | 2.4 kW | 5 min |

These conditions produced samples with a breaking load in the 600N range and structures with well dispersed graphite particles.

It will be appreciated that in commercial implementations of the present invention, it is preferred to use a reactor which can treat large number of samples simultaneously. The enclosed figure illustrates a system for treating of the order of 24 samples.

The system comprises a chamber (10) within which the microwave plasma is formed at frequencies of either 2.45 GHz or 915 MHz. Three ports are shown on the base of the microwave chamber (10), these are for pumping (20), for gas input (24) and for sample manipulation / rotation (22). This latter port is used in conjunction with a carousel substrate holder system (30). In the arrangement shown six holders (molybdenum trays) each containing four superabrasive composite samples for sintering are rotated on the carousel (30). The composites can be inserted onto and afterwards removed from the trays through port (26). The trays are then rotated on the carousel (30) until they individually arrive at a position under the plasma. The tray is then brought up into the plasma and rotated using a rod mounted in (22). This rod is also used to remove the tray from the plasma. Using the system shown up to (24) composite samples can be treated in a given batch, without having to turn off the plasma. The rate at which the rod brings the tray up into the plasma will dictate the rate of heating of the composite before it experience full plasma exposure. Alternatively the plasma power can be adjusted in sequence with the required composite heating cycle. Using a chamber with a vacuum load lock system it is also possible to isolate the plasma treatment chamber from part of the carousel to facilitate loading and unloading of the pellets. This facilitates the operation of the plasma treatment system in continuous mode.

The above-described embodiments have dealt with coating of a part surface or substrate with an abrasive or wear resistant material. It will be appreciated that in particular applications, it could be useful to deposit the abrasive particle containing mixture in a pattern on the part. Thus, the material of the mixture could be suspended in a metal-based ink and either ink-jet printed or screen-printed according to the pattern onto the part. Alternatively, techniques including reprography, soft lithography or dip coating could be used to produce the patterned coating. In the case of dip coating, the part to be coated would be dipped in an ink slurry. Most of these techniques would involve the use of some organic additives (carrier, rheology modifier, wetting agents, etc), and so it is preferable to get rid of the organic additive(s) in some way before, during or after the sintering process, in particular to provide porosity, at least in grinding applications. This could involve treating the coated part, possibly in an oxidising atmosphere, before or after sintering, so as to burn the organic additive(s); or dissolving the additive in solvents after sintering.

As well as the additives mentioned above, other additives that can be used with the present invention divide into a number of categories as follows:

Secondary Abrasive may be used at levels of about 0.1 to 40%, preferably about 1 to 20% by volume of the fired abrasive tool, for example, as disclosed in US Patent 5,607,489, Rounan Li which lists alumina and fused alumina abrasives, sol gel, seeded and unseeded, alpha-alumina abrasives, silicon carbide, and the like as possible additives. Further references include: alumina, silicon carbide, zirconia-alumina, garnet, emery, and flint, US Patent 5,472,461, Li Rounan; cubic boron nitride, US Patent 4,157,897, Paul P. Keat; or corundum, boron carbide and tungsten carbide chips, US Patent 3,850,590, Chalkley.

Abrasive coating is commonly used to protect the abrasive somewhat from graphitisation during processing at elevated temperature and also to aid bonding of the abrasive particle to the matrix bond materials, for example, as disclosed in Liu, J.H., Pei, Z.J. & Fisher, G.R. "Grinding wheels for manufacturing of silicon wafers: A literature review", International Journal of Machine Tools and Manufacture, Volume 47, Issue 1, January 2007, Pages 1-13. Also, US Patent 5,607,489, Rounan Li, suggests copper, silver, nickel, cobalt, molybdenum and alloys thereof as suitable coating materials for diamond particles.

Lubricant can be added to grinding segments in order to aid the grinding process. US Patent 6,086,648, Rossetti discusses the addition of oil/wax mixtures to the porous grinding tools as a lubricant to allow for dry machining. US Patent Appplication No. 2005/181715, Galen lists hexagonal boron nitride, molybdenum disulfide, graphite, coke or a lithium state as possible lubricants. US Patent 3,383,191, Thomas describes the use of Boron Nitride as a lubricant in resin bonded diamond tools. Also US Patent 5,607,489, Rounan Li lists crystalline (flake) graphite, molybdenum sulfide, polytetrafluoroethylene, hexagonal boron nitride and other solid lubricants. US Patent 5,472,461, Li Rounan gives graphite, hexagonal boron nitride (sometimes referred to as "white graphite"), molybdenum disulfide, and various mixtures of any of the foregoing as examples of lubricants. It also states that graphite can be used in the form of powder, crystals, flake, rods, plates, or fibers.

Filler: US Patent 4,157,897, Keat uses metal fillers such as silver, copper, aluminum, and tin. US Patent 6,887,287, Rounan describes using fillers consisting of hollow bodies. US Patent Application No. 2005/181715, Galen mentions "porosity fillers", either a ceramic material shaped into spheroids or a 14/40 ceramic bubble material. US Patent 5,607,489, Rounan Li states that porosity may be induced by the addition to a mixture of the abrasive grain and bond components of hollow ceramic spheres and other high temperature resistant materials having an appropriate geometry. Fillers in various shapes and physical forms, including, but not limited to, metal powder, hollow ceramic or glass spheres, silicon carbide, alumina, solid mullite, fumed silica, titanium dioxide, may be added in amounts effective to enhance tool manufacture and/or grinding performance, e.g., about 0.1 to 40%, preferably 4 to 10%, by volume of the fired abrasive tool. US Patent 3,850,590, Chalkley talks about infiltrating the continuous porous metal matrix with a resinoid material in liquid form, the resinoid material selected from the group consisting of: epoxide, polyester, polyurethane, phenolic, aminoplastic, polyamide, polyamid-imide, alkyd, furan, silicone, acrylic, polyacetal, and polycarbonate resins. US Patent 5,472,461, Li Rounan gives as examples of possible fillers silicon carbide, alumina, solid mullite, fumed silica, sol gel materials, titanium dioxide and boron suboxide. Hollow glass bodies may also be used, the shape of which can be any of the types commonly available, e.g., beads or rods, for example. In preferred embodiments, the glass is in the form of hollow spheres or bubbles. Also, US Patent 5,203,886, Sheldon et al describes high porosity vitrified bonded grinding wheels, prepared by the use of bubbled alumina beads and particles of an organic pore-inducing material such as graphite, nut shells, or wood particles.

Dispersoid is typically initially mixed with the abrasive and matrix, undergoes the curing process and is dissolved by water or solvent, for example, as disclosed in Irish Patent No. 84509, Ramanath which states "Substantially any dispersoid that may be readily dissolved in a solvent such as water, alcohol, acetone, and the like, may be used. In general, dispersoids that are soluble in water, such as salts including sodium chloride, potassium chloride, magnesium chloride, calcium chloride, sodium silicate, sodium carbonate, sodium sulfate, potassium sulfate, magnesium sulfate, and the like, and mixtures thereof are preferred. For use in some grinding applications (such as silicon wafers and other electronics components), the use of a non-ionic (i.e., non-salt) dispersoid, such as sugar, dextrin, polysaccharide oligomers, may be desirable. Most preferred are dispersoids having a relatively high solubility in water and relatively rapid dissolution kinetics, such as sodium chloride or sugar."

Finally, as disclosed in Liu, agglomerates of abrasive particles may be formed where the abrasive particle size is very small and for porous grinding segments larger agglomerates are better for abrasive particle retention.

## Claims

1. A method for producing articles having a composite surface including abrasive particles, comprising:
a) repeatedly depositing a mixture of abrasive particles and a metal binding matrix to form a respective body including pressing each mixture in a press to form a green body;
b) inserting a plurality of said green bodies onto one tray of a plurality of trays;
c) loading a tray including a plurality of said green bodies into a microwave plasma chamber (10);
d) at least partially evacuating said chamber (10);
e) sintering the green bodies in a microwave plasma for a period of time to produce said articles;
f) removing the tray from the plasma chamber (10);
g) removing the sintered articles from the tray; and
h) repeating steps b) to g) for successive trays of said plurality of trays.

2. A method according to claim 1 wherein step d) comprises: partially evacuating said chamber to a first low pressure; and introducing a gas into said chamber until said pressure reaches a second higher pressure.

3. A method according to claim 2 wherein said gas comprises one of: hydrogen; a reducing gas; an inert gas; or a combination thereof.

4. A method according to claim 2 wherein said first low pressure is 0.1 mbar and said second higher pressure is 20 mbar.

5. A method according to claim 1 comprising ramping up said microwave plasma power during said sintering.

6. A method according to claim 1 wherein the mixture comprises diamond particles and a nickel binding matrix.

7. A method according to claim 1 wherein said metal binding matrix comprises one of: copper, cobalt or nickel cobalt.

8. A method according to claim 1 wherein said articles provide a wear resistant surface, wherein said depositing comprises pressing said mixture at a pressure of approximately 350MPa and wherein said sintering is for between 10 and 15 minutes; or said articles comprise a grinding element and wherein said depositing comprises pressing said mixture at a pressure of 150MPa.

9. A method according to claim 1 wherein said depositing comprises pressing said mixture to a surface of one of: a metal; a stainless steel; or a cemented carbide substrate.

10. A method according to claim 1 wherein said sintering is performed at a first temperature and comprising the steps of:
removing and shaping said sintered articles; and
second sintering said shaped articles at a second sintering temperature relatively higher than said first sintering temperature.

11. A method according to claim 1 wherein said abrasive particles comprise either: diamond coated in one of nickel, copper, silver, cobalt, molybdenum or alloys thereof; or one of: cubic boron nitride, tungsten carbide, silicon carbide or aluminium oxide particles.

12. A method according to claim 1 wherein said depositing comprises pressing said mixture with a steel punch and die.

13. A method according to claim 1 further comprising loading said bodies into said chamber (10) from a carousel (30).

14. A method according to claim 1 wherein the mixture further comprises one of: 2% carbon by weight; an additive arranged to increase porosity in the grinding element; secondary abrasives of up to 40% by volume; a lubricant; a filler; or a dispersoid.

15. A method according to claim 1 further comprising: forming agglomerates of said abrasive particles.

## Patentansprüche

1. Verfahren zum Herstellen von Artikeln mit einer Verbund-Oberfläche, die abrasive Partikel aufweist, umfassend:
a) wiederholtes Deponieren einer Mischung von abrasiven Partikeln und einer Metall-Bindematrix zur Bildung eines entsprechenden Körpers, einschließlich dem Verpressen einer jeden Mischung in einer Presse zur Bildung eines Rohlings;
b) Einsetzen einer Mehrzahl dieser Rohlinge auf einer Ablage aus einer Mehrzahl von Ablagen;
c) Beschicken einer Mikrowellen-Plasmakammer (10) mit einer Ablage mit einer Mehrzahl dieser Rohlinge;
d) ein zumindest teilweises Evakuieren der Kammer (10);
e) Sintern der Rohlinge in einem Mikrowellenplasma für eine Zeitdauer zur Herstellung besagter Artikel;
f) Entfernen der Ablage aus der Plasmakammer (10);
g) Entfernen der gesinterten Artikel von der Ablage; und
h) Wiederholen der Schritte b) bis g) für nachfolgende Ablagen aus der Mehrzahl der Ablagen.

2. Verfahren nach Anspruch 1, wobei Schritt d) umfasst: teilweises Evakuieren der besagten Kammer auf einen ersten niedrigen Druck; und Einführen eines Gases in die besagte Kammer, bis der Druck einen zweiten höheren Druck erreicht.

3. Verfahren nach Anspruch 2, wobei das Gas einen der folgenden Bestandteile aufweist: Wasserstoff; ein reduzierendes Gas; ein Edelgas; oder eine Kombination hieraus.

4. Verfahren nach Anspruch 2, wobei besagter erster geringer Druck 0,1 mbar ist und besagter zweiter hoher Druck 20 mbar ist.

5. Verfahren nach Anspruch 1, umfassend ein Erhöhen der Mikrowellen-Plasmaleistung während des Sinterns.

6. Verfahren nach Anspruch 1, wobei die Mischung Diamantpartikel und eine Nickel-Bindematrix umfasst.

7. Verfahren nach Anspruch 1, wobei besagte Metall-Bindematrix einen Bestandteil aufweist von: Kupfer, Kobalt oder Nickelkobalt.

8. Verfahren nach Anspruch 1, wobei besagte Partikel eine abriebfeste Oberfläche vorsehen, wobei besagtes Deponieren ein Verpressen der Mischung bei einem Druck von näherungsweise 350 MPa umfasst, und wobei besagtes Sintern für zwischen 10 und 15 Minuten vorgesehen ist; oder besagte Partikel weisen ein Schleifelement auf und wobei besagtes Deponieren ein Verpressen der Mischung bei einem Druck von 150 MPa umfasst.

9. Verfahren nach Anspruch 1, wobei besagtes Deponieren ein Verpressen der Mischung auf eine Oberfläche eines folgender Bestandteile umfasst: eines Metalls; eines rostfreien Stahls; oder eines zementierten Karbid-Substrates.

10. Verfahren nach Anspruch 1, wobei besagtes Sintern bei einer ersten Temperatur ausgeführt wird und die Schritte umfasst:
Entfernen und Formgestalten der besagten gesinterten Artikel; und
ein zweites Sintern der formgestalteten Artikel bei einer zweiten Sintertemperatur, die in Relation zur ersten Sintertemperatur höher ist.

11. Verfahren nach Anspruch 1, wobei die besagten abrasiven Partikel entweder aufweisen: eine Diamantbeschichtung in einem der Bestandteile Nickel, Kupfer, Silber, Kobalt, Molybdän oder Legierungen hieraus; oder einem der Bestandteile: kubisches Bornitrid, Wolframkarbid; Siliziumkarbid oder Aluminiumoxidpartikel.

12. Verfahren nach Anspruch 1, wobei besagtes Deponieren ein Verpressen der Mischung mit einem Stahl-Stempel und Ausformgesenk umfasst.

13. Verfahren nach Anspruch 1, ferner umfassend ein Beschicken der besagten Kammer (10) mit den besagten Körpern von einem Umlaufförderer (30).

14. Verfahren nach Anspruch 1, wobei die Mischung ferner einen der Bestandteile aufweist: 2 Gewichts% Kohlenstoff; ein Additiv, das zur Erhöhung der Porosität in dem Schleifelement vorgesehen ist; zweite Abrasivmittel von bis zu 40 Volumen%; ein Schmiermittel; ein Füller; oder ein Dispersoid.

15. Verfahren nach Anspruch 1, ferner umfassend: ein Bilden von Agglomeraten der besagten abrasiven Partikel.

## Revendications

1. Procédé destiné à produire des articles qui présentent une surface composite qui comprend des particules abrasives, comprenant les étapes consistant à :
a) déposer à plusieurs reprises un mélange de particules abrasives et une matrice de liaison de métal de façon à former un corps respectif, y compris une étape consistant à presser chaque mélange dans une presse de façon à former un corps vert ;
b) insérer une pluralité desdits corps verts sur un plateau d'une pluralité de plateaux ;
c) charger un plateau qui comprend une pluralité desdits corps verts dans une chambre à plasma à micro-ondes (10) ;
d) faire le vide en partie au moins dans ladite chambre (10) ;
e) fritter les corps verts dans un plasma à micro-ondes pendant une période de temps de façon à produire lesdits articles ;
f) retirer le plateau de la chambre à plasma (10) ;
g) retirer les articles frittés du plateau ; et
h) répéter les étapes b) à g) pour les plateaux successifs de ladite pluralité de plateaux.

2. Procédé selon la revendication 1, dans lequel l'étape d) comprend les étapes consistant à : faire le vide en partie dans ladite chambre jusqu'à une première pression basse ; et introduire un gaz dans ladite chambre jusqu'à ce que ladite pression atteigne une seconde pression plus élevée.

3. Procédé selon la revendication 2, dans lequel ledit gaz comprend un gaz sélectionné dans le groupe constitué par : l'hydrogène ; un gaz réducteur ; un gaz inerte ; ou une combinaison de ceux-ci.

4. Procédé selon la revendication 2, dans lequel ladite première pression basse est égale à 0,1 mbar et ladite seconde pression plus élevée est égale à 20 mbar.

5. Procédé selon la revendication 1, comprenant l'élévation progressive de la puissance dudit plasma à micro-ondes au cours de ladite étape de frittage.

6. Procédé selon la revendication 1, dans lequel le mélange comprend des particules de diamant et une matrice de liaison de nickel.

7. Procédé selon la revendication 1, dans lequel ladite matrice de liaison de métal comprend un métal sélectionné dans le groupe constitué par : le cuivre, le cobalt ou le nickel-cobalt.

8. Procédé selon la revendication 1, dans lequel lesdits articles procurent une surface résistante à l'usure, dans lequel ladite étape de dépôt comprend une étape consistant à presser ledit mélange à une pression approximativement égale à 350 MPa, et dans lequel la durée de ladite étape de frittage est comprise entre 10 minutes et 15 minutes ; ou lesdits articles comprennent un élément abrasif et dans lequel ladite étape de dépôt comprend une étape consistant à presser ledit mélange à une pression égale à 150 MPa.

9. Procédé selon la revendication 1, dans lequel ladite étape de dépôt comprend une étape consistant à presser ledit mélange sur la surface : d'un métal ; d'un acier inoxydable ; ou d'un substrat de carbure cémenté.

10. Procédé selon la revendication 1, dans lequel ladite étape de frittage est exécutée à une première température, et qui comprend les étapes consistant à :
retirer et mettre en forme lesdits articles frittés ; et
exécuter un second frittage sur lesdits articles mis en forme à une seconde température de frittage relativement plus élevée que ladite première température de frittage.

11. Procédé selon la revendication 1, dans lequel lesdites particules abrasives comprennent un élément sélectionné dans le groupe constitué par : du diamant revêtu de l'un des éléments sélectionné dans le groupe constitué par : le nickel, le cuivre, l'argent, le cobalt, le molybdène ou des alliages de ceux-ci ; ou des particules sélectionnées dans le groupe constitué par : des particules de nitrure de bore cubique, des particules de carbure de tungstène, des particules de carbure de silicium ou des particules d'oxyde d'aluminium.

12. Procédé selon la revendication 1, dans lequel ladite étape de dépôt comprend une étape consistant à presser ledit mélange avec un poinçon en acier et une matrice.

13. Procédé selon la revendication 1, comprenant en outre une étape consistant à charger lesdits corps dans ladite chambre (10) à partir d'un carrousel (30).

14. Procédé selon la revendication 1, dans lequel le mélange comprend en outre un élément sélectionné dans le groupe constitué par : 2 % de carbone en poids ; un additif agencé de façon à accroître la porosité dans l'élément abrasif ; des abrasifs secondaires jusqu'à 40 % en volume ; un lubrifiant ; un agent de remplissage ; ou un agent de dispersion.

15. Procédé selon la revendication 1, comprenant en outre une étape consistant à : former des agglomérats desdites particules abrasives.
